# FASCICULE DE BREVET EUROPEEN

(11) **EP 2 798 583 B1**
(45) Date de publication et mention de la délivrance du brevet: **03.05.2017**
(21) Numéro de dépôt: 12816775.6
(22) Date de dépôt: 21.12.2012
(51) Int. Cl.: G06K 19/077

(54) **PROCEDE DE FABRICATION D'UNE CARTE DE PETITE EPAISSEUR DETACHABLE D'UNE PLAQUE DE GRANDE EPAISSEUR**
VERFAHREN ZUR HERSTELLUNG EINER VON EINER DICKEN PLATTE LÖSBAREN DÜNNEN KARTE
METHOD OF MANUFACTURING A CARD OF SMALL THICKNESS DETACHABLE FROM A PLATE OF LARGE THICKNESS

(30) Priorité: 29.12.2011 FR 1162522
(43) Date de publication de la demande: 05.11.2014
(73) Titulaire: Oberthur Technologies, 92700 Colombes (FR)
(72) Inventeur: BOSQUET, Olivier, F-35500 Vitre (FR); SIMONEAUX, Grégory, F-35530 Servon sur Vilaine (FR)
(74) Mandataire: Santarelli
(86) Numéro de dépôt international: PCT/FR2012/053057
(87) Numéro de publication internationale: WO 2013/098518

(56) Documents cités:
- WO-A1-02/066226
- DE-A1- 19 906 570

## Description

La présente invention concerne le domaine des cartes, telles les cartes à microcircuit et de la fabrication desdites cartes.

Les cartes à microcircuit sont utilisées dans des domaines variés, tels que la banque pour réaliser des cartes de retrait ou de crédit, l'authentification des personnes pour réaliser des documents identitaires ou encore la téléphonie cellulaire pour réaliser des cartes d'abonnement téléphonique ou cartes SIM.

Dans ces domaines l'épaisseur des cartes est restée la même depuis l'invention et la normalisation des cartes à microcircuit.

Particulièrement dans le domaine de la téléphonie, les cartes à microcircuit ou cartes SIM ont vu leur format se réduire avec la réduction de la taille des terminaux.

Ainsi les premières cartes présentaient un format ID1, sensiblement rectangulaire de dimensions 54 x 85,6 mm pour une épaisseur de 0,76+/-0,08mm. Ce format a ensuite été remplacé par un format 2FF plus petit de dimensions 15 x 25 mm pour une même épaisseur. Un format 3FF, encore réduit, a été récemment créé avec pour dimensions 12 x 15 mm et une épaisseur toujours identique.

Le problème apparait avec un nouveau format 4FF de dimensions réduites à 8,8 x 12,3 mm, pour lequel l'épaisseur est réduite et doit être égale à 0,65+0,03/-0,07mm.

Il est à noter que la zone commune aux deux intervalles d'épaisseur, soit [0,68, 0,70] présente une largeur de 20 µm trop faible pour envisager de réaliser une plaque répondant, en épaisseur, aux deux formats.

La pratique habituelle est de réaliser une carte détachable dans une plaque de format ID1 de grande épaisseur 0,76+/-0,08mm. Il est avantageux de pouvoir continuer à utiliser les plaques existantes et surtout les nombreux outillages et moyens de fabrication existants, y compris pour réaliser les nouvelles cartes 4FF.

De plus, les différents formats évoqués ci-dessus sont amenés à coexister, et il convient de réaliser au moins un adaptateur de format depuis le nouveau format 4FF vers les formats plus anciens 3FF, 2FF, 1FF, ID1. Un tel adaptateur présente un format extérieur similaire à un des formats anciens. Ici encore la pratique est de disposer un ou plusieurs tels adaptateurs, conjointement avec une carte, dans une même plaque de format ID1. Or, un tel adaptateur présente nécessairement une grande épaisseur.

Le document WO02/066226A1 décrit la fabrication d'une carte et d'un adaptateur de même épaisseur, à partir d'une plaque de plus grande épaisseur.

Le problème que se propose de résoudre la présente invention est de fabriquer une carte de petite épaisseur dans une plaque de grande épaisseur.

L'invention a pour objet un procédé selon la revendication 1.

Selon une autre caractéristique de l'invention, l'adaptateur circonscrit la carte.

Selon une autre caractéristique de l'invention, l'adaptateur circonscrit le trou.

Selon une autre caractéristique de l'invention, un adaptateur est disposé à côté de la carte.

Selon une autre caractéristique de l'invention, un trou est réalisé par matriçage de la plaque au moyen d'un poinçon complémentaire dudit trou.

Selon une autre caractéristique de l'invention, un trou est réalisé par moulage de la plaque, au moyen d'un moule comprenant une forme complémentaire dudit trou.

Selon une autre caractéristique de l'invention, un trou est réalisé par usinage de la plaque.

Selon une autre caractéristique de l'invention, une étape de prédécoupe comprend une découpe partielle en longueur et totale en épaisseur.

Selon une autre caractéristique de l'invention, une étape de prédécoupe comprend une découpe totale en longueur et partielle en épaisseur.

Selon une autre caractéristique de l'invention, la carte est une carte à microcircuit comprenant une plaque de contact disposée sur une de ses faces, et l'étape de réalisation réalise un trou sur la face opposée à la plaque de contact.

Selon une autre caractéristique de l'invention, l'étape de réalisation réalise un trou sur la même face que la plaque de contact.

L'invention concerne encore un produit obtenu par le procédé selon l'une quelconque des revendications précédentes.

D'autres caractéristiques, détails et avantages de l'invention ressortiront plus clairement de la description détaillée donnée ci-après à titre indicatif en relation avec des dessins sur lesquels :
- la figure 1 présente, en vue de face, un mode de réalisation d'une carte et d'un adaptateur dans une plaque,
- la figure 2 présente, en section coupée selon A-A, le mode de réalisation de la figure 1,
- la figure 3 présente un diagramme du procédé,
- la figure 4 présente un produit intermédiaire,
- la figure 5 illustre un mode de réalisation d'un trou par laminage,
- la figure 6 illustre un mode de réalisation d'un trou par moulage,
- la figure 7 illustre un mode de réalisation d'un trou par usinage.

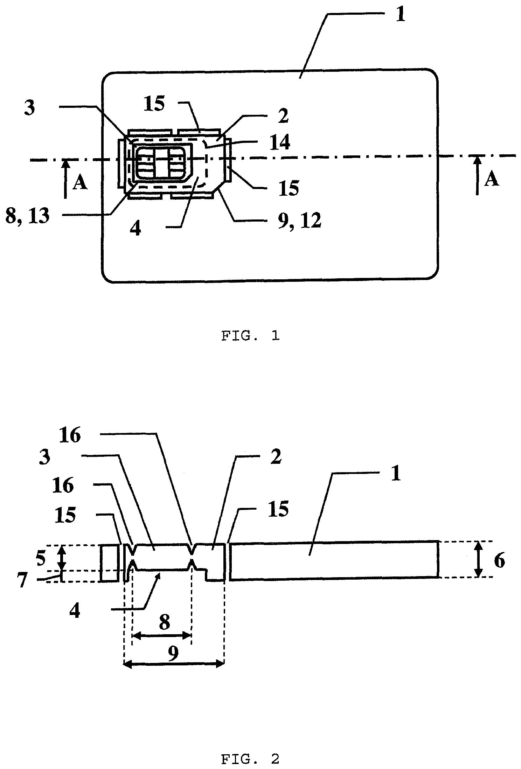

La figure 1 présente un mode de réalisation d'un produit selon l'invention. Un tel produit comprend une plaque 1 mince. On entend par mince dans la présente que son épaisseur est négligeable relativement aux autres dimensions. Ladite plaque 1 est par exemple rectangulaire et de dimensions suffisantes pour être manipulée à la main. Une dimension habituelle est celle du format ID1 : 54 x 85,6 mm Ce format est par exemple normalisé par ISO 7816.

Dans une telle plaque 1 est disposée une carte 3. La carte 3 est par exemple une carte à microcircuit. Cette carte 3 est une carte conforme à un petit format 8. Cette carte 3 est détachable sans outil de la plaque 1 du fait de la présence d'une prédécoupe réalisée le long d'un contour extérieur 13 de ladite carte 3.

Dans une telle plaque 1 est encore disposé un adaptateur 2. Il peut être disposé dans une même plaque 1, à côté de la carte 3. Il peut encore, comme illustré aux figures 1 et 2 être disposé dans une même plaque 1, autour de la carte 3.

En effet, un tel adaptateur 2 est conforme à un grand format 9. Il comprend un contour extérieur 12 et un contour intérieur de même forme et complémentaire du contour extérieur 13 de la carte 3. Aussi, selon le mode de réalisation illustré aux figures 1 et 2 l'adaptateur 2 est avantageusement disposé autour de la carte 3. Une telle disposition est avantageuse en ce qu'elle permet de n'occuper qu'une surface minimale de la plaque 1.

Il est ainsi encore possible de disposer un adaptateur 2 autour de la carte 3 et au moins un autre adaptateur à côté de la carte 3 dans une même plaque 1. Une même plaque 1 peut alors avantageusement servir de support pour distribuer ensemble une carte 3, un adaptateur vers un premier grand format et le cas échéant au moins un deuxième adaptateur vers un deuxième grand format.

Selon une particularité adressée par l'invention, la carte 3 présente une petite épaisseur 5 plus faible qu'une grande épaisseur tant de la plaque 1 que du ou des adaptateur(s) 2.

Une fabrication de la carte 3 et de la plaque 1 de matière, et d'au moins un adaptateur 2, est avantageuse et peut être obtenue par un procédé qui va maintenant être décrit.

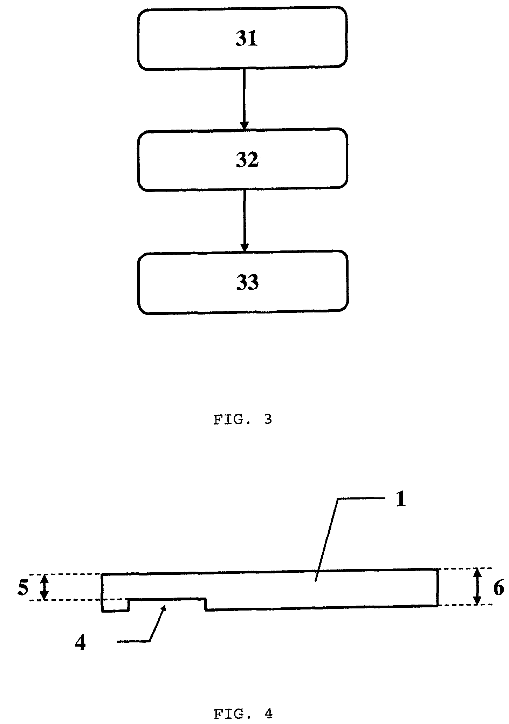

Un tel procédé comprend une première étape 31 consistant à réaliser un premier produit intermédiaire illustré à la figure 4, selon une vue coupée selon un axe A-A, comparable à la vue de la figure 2. Au cours de cette première étape 31 il est réalisé dans une plaque 1 d'épaisseur sensiblement constante égale à une grande épaisseur 6 au moins un trou 4.

Il est possible de réaliser un unique trou 4. Dans ce cas ce trou 4 peut être disposé d'un côté ou de l'autre de la plaque 1. La profondeur 7 d'un tel trou 4 unique est égale à la différence entre la grande épaisseur 6 de la plaque 1 et la petite épaisseur 5 de la carte 5. Ainsi, au droit du trou 4 qui produit une réduction d'une profondeur 7 relativement à une grande épaisseur 6, il persiste une épaisseur résiduelle égale à une petite épaisseur 5.

Il est encore possible de réaliser un trou 4 de chaque côté de la plaque 1. Dans ce cas, ces deux trous 4 sont disposés en regard l'un de l'autre. Ils présentent avantageusement des contours de trou sensiblement similaires, avantageusement superposés. La profondeur cumulée de deux tels trous 4, soit la profondeur d'un premier trou ajoutée à la profondeur d'un deuxième trou, est égale à la différence entre la grande épaisseur 6 de la plaque 1 et la petite épaisseur 5 de la carte 5. Ainsi, au droit des deux trous 4 qui produisent une réduction relativement à une grande épaisseur 6, il persiste une épaisseur résiduelle égale à une petite épaisseur 5.

On considère pour la suite que les deux contours de trou sont sensiblement similaires, selon un unique contour de trou 14.

Au cours d'une deuxième étape 32, il est procédé à une prédécoupe de la carte 3 de petit format 8. Ladite prédécoupe suit un contour extérieur 13 de la carte 3.

Puisque la carte 3 doit présenter une épaisseur égale à la petite épaisseur 5 sur la totalité de sa surface, ladite prédécoupe est avantageusement réalisée inscrite dans ledit trou 4. Autrement dit, le contour extérieur 13 de la carte 3 est inscrit dans le contour 14 du trou 5. Le terme « inscrit » inclut ici l'égalité : le contour extérieur 13 de la carte 3 peut être confondu avec le contour 14 du trou. Ainsi lors d'un détachage réalisé par rupture de ladite prédécoupe, la carte 3 est extraite de la plaque 1, et présente sur toute sa surface une épaisseur égale à la petite épaisseur 5.

Le petit format de la carte 3 peut être quelconque en forme et en dimension. Selon un mode préférentiel ce peut être un format 4FF défini par des dimensions de 8,8 x 12,3 mm pour le contour extérieur 13 et une petite épaisseur de 0,65+0,03/-0,07mm.

Selon une troisième étape 33, il est procédé à une prédécoupe d'un adaptateur de grand format 9. Au cours de cette étape il est réalisé une prédécoupe selon un contour extérieur 12 de l'adaptateur 2 qui correspond au grand format 9. Il est encore procédé à une seconde prédécoupe selon un contour intérieur de l'adaptateur 2. Cette seconde prédécoupe est confondue avec l'étape précédente 32 lorsque l'adaptateur 2 est disposé autour de la carte 3. Elle doit être réalisée indépendamment sinon.

Le grand format de l'adaptateur 2 peut être quelconque en forme et en dimension. Selon un mode préférentiel ce peut être un format 3FF défini par des dimensions de 12 x 15 mm pour le contour extérieur 12 et une grande épaisseur de 0,76+/-0,08 mm et/ou un format 2FF défini par des dimensions de 15 x 25 mm pour le contour extérieur 12 et une grande épaisseur de 0,76+/-0,08mm.

Comme déjà mentionné, un adaptateur 2 peut avantageusement être disposé autour de la carte 3, dans une position relative correspondant à sa position d'utilisation finale. Un tel adaptateur 2 circonscrit alors la carte 3. Autrement dit, le contour extérieur 12 de l'adaptateur 2 circonscrit le contour extérieur 13 de la carte 3.

Un adaptateur peut encore alternativement ou complémentairement être disposé à côté de la carte 3 dans une même plaque 1.

Dans le cas où l'adaptateur 2 est disposé autour de la carte 3, il convient qu'il présente une épaisseur égale à la grande épaisseur 6. Ceci est nécessaire pour que ledit adaptateur 2 puisse être introduit et utilisé de manière maintenue dans un lecteur de carte adapté au grand format 9. Cette contrainte est réalisée si cette grande épaisseur 6 est présente sur des parties prédéterminées de la surface de l'adaptateur 2. Un lecteur de carte comprend typiquement des glissières latérales sur au moins une partie du contour extérieur 12 du grand format 9. Il convient donc que l'adaptateur 2 présente une grande épaisseur 6 au moins sur la partie correspondante de son contour extérieur 12. Un moyen de réaliser cette contrainte est que l'adaptateur 2 circonscrive le trou 4. Autrement dit, il convient que le contour extérieur 12 de l'adaptateur 2 circonscrive le contour extérieur 14 du trou 4. Puisque, comme décrit précédemment, il convient que l'adaptateur 2 présente une épaisseur égale à la grande épaisseur 6 au moins sur une partie de sa surface, cette circonscription s'entend ici strictement : le contour extérieur 12 de l'adaptateur 2 ne peut être égal au contour extérieur 14 du trou.

Il est notable que cette contrainte n'apparait pas pour un adaptateur disposé à côté de la carte 3. En effet dans ce cas, l'épaisseur de l'adaptateur 2 est constante sur toute sa surface et égale à la grande épaisseur 6.

Les deux premières étapes 31, 32 ou les trois étapes 31, 32, 33 du procédé sont présentées en une séquence arbitraire. Cependant il est important de noter que ces étapes peuvent être réalisées dans des ordres différents. L'étape de prédécoupe 32 de la carte 3 peut être réalisée avant l'étape 31 de réalisation du trou, notamment dans le cas d'une prédécoupe partielle en longueur qui sera décrite plus loin. Selon les modes de réalisation, ces deux étapes peuvent être réalisées en même temps. L'étape de prédécoupe 33 de l'adaptateur 2 peut être réalisée avant, pendant ou après l'une ou l'autre des deux étapes 31 et 32.

L'étape 31 du procédé qui aboutit au produit intermédiaire illustré à la figure 4, réalise au moins un trou 4 dans une plaque 1 de grande épaisseur 6. Pour cela plusieurs modes de réalisation sont offerts.

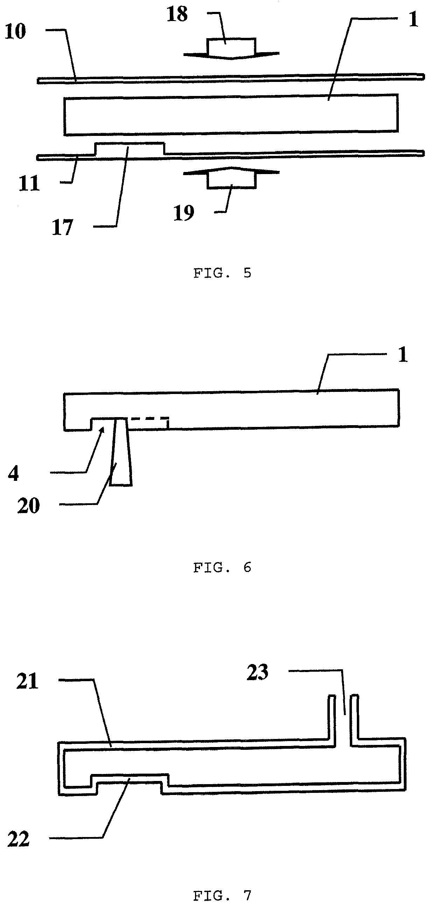

Selon un premier mode de réalisation, illustré à la figure 5, la plaque 1 est réalisée par laminage. La plaque 1 constituée d'une ou plusieurs couches de matériau, par exemple plastique, tel du polycarbonate, est laminée entre deux outillages 10-11 complémentaires. Ces outillages 10-11 peuvent être des outillages plans mis en oeuvre par une presse ou encore être conformé en rouleaux entre lesquels la plaque 1 est laminée par rotation desdits rouleaux. Ces deux outillages 10-11 pressent, de manière connue, entre eux deux, les composants d'une plaque 1, en se rapprochant selon les directions figurées par les flèches 18, 19. Ce pressage peut être appliqué le cas échéant à température élevée.

De manière connue deux outillages lisses, similaires à l'outillage 10, réalisent une plaque 1 d'épaisseur uniforme. Au contraire, selon l'invention, au moins un des outillages 10-11, ici l'outillage 11, est muni d'un poinçon 17 protubérant de forme complémentaire en plein de la forme en creux que l'on souhaite pour le trou 4. Ce poinçon 17 vient, lors du pressage, réaliser une mise en forme de la plaque 1 et former ainsi un trou 4. Il est à noter ici que cette étape de matriçage est réalisée conjointement à une étape de laminage qui réalise la plaque 1. La plaque 1 est ainsi fabriquée avec ledit au moins un trou 4 intégré.

Selon un autre mode de réalisation, illustré à la figure 7, la plaque 1 et un trou 4 sont réalisés par moulage. La plaque 1 est ici réalisée au moyen d'un moule 21. Ledit moule 21 présente une forme complémentaire de la plaque 1 munie d'au moins un trou 4, telle que figurée à la figure 4. Ledit moule 21 comprend au moins une forme 22 rentrante vers l'intérieur du moule 21 de forme complémentaire en plein de la forme en creux que l'on souhaite pour un trou 4. Le matériau constitutif de la plaque 1 est introduit sous forme liquide par un canal d'introduction 23. Après solidification, la plaque 1 est obtenue avec au moins un trou 4 intégré.

Selon un autre mode de réalisation, illustré à la figure 6, un trou 4 est réalisé par usinage. Dans ce mode de réalisation, la plaque 1 est réalisée préalablement par tout moyen, tel que laminage, moulage, usinage, etc., selon une épaisseur uniforme égale à la grande épaisseur 6. Il est ensuite procédé à un retrait de la matière surabondante au niveau d'au moins un trou 4 au moyen d'un outil 20. Ledit usinage peut être mécanique, par exemple au moyen d'une fraise 20. Il peut encore être thermique au moyen d'un outil 20 laser ou encore chimique au moyen d'un solvant.

Quel que soit le mode de réalisation de l'étape 31 de réalisation d'au moins un trou 4, il est obtenu une plaque 1 pourvue d'au moins un trou 4, dont une forme indicative est illustrée à la figure 4, selon un mode de réalisation avec un unique trou 4.

Sur cette forme il est procédé à l'étape de prédécoupe 32 d'une carte 3 et à l'étape de prédécoupe 33 d'un adaptateur 2. Une prédécoupe peut être réalisée selon au moins deux modes de réalisation qui peuvent être employés séparément ou complémentairement.

L'objectif d'une prédécoupe est de permettre de relier deux éléments jusqu'à ce que soit réalisée une séparation desdits deux éléments par une rupture de la partie résiduelle de la prédécoupe. Une prédécoupe a ainsi pour fonction de fragiliser une ligne de contour de séparation afin qu'une rupture soit possible avec un faible effort et de préférence sans outillage. Une prédécoupe est une découpe partielle.

Selon un premier mode de réalisation, une prédécoupe, que ce soit la prédécoupe du contour extérieur 13 de la carte 3 ou la prédécoupe du contour extérieur 12 de l'adaptateur 2, comprend une découpe partielle en longueur et totale en épaisseur. Le long du contour 12, 13 de prédécoupe la plaque 1 est découpée sur la totalité de son épaisseur. Cependant cette découpe n'est pas réalisée sur la totalité de la longueur dudit contour 12, 13 et des épargnes de matière persistent entre deux découpes 15 successives. Une telle découpe partielle en longueur est encore nommée détourage.

Selon un deuxième mode de réalisation, une prédécoupe comprend une découpe totale en longueur et partielle en épaisseur. Le long du contour 12, 13 de prédécoupe la plaque 1 est découpée sur la totalité de la longueur dudit contour 12, 13. Cependant cette découpe n'est pas réalisée sur la totalité de l'épaisseur de la plaque 1 et une épaisseur résiduelle persiste.

Il est possible de combiner ces deux modes de réalisation. Il est réalisé une prédécoupe partielle en longueur, et sur les parties épargnées du contour 12, 13 il est réalisé une prédécoupe partielle en épaisseur.

Afin d'illustrer ces deux modes de réalisation, les figures 1, 2 présentent un exemple de réalisation pour lequel le premier mode de réalisation, partiel en longueur, est utilisé pour réaliser la prédécoupe 33 de l'adaptateur 2 et le deuxième mode de réalisation, partiel en épaisseur, est utilisé pour réaliser la prédécoupe 32 de la carte 3.

Il apparait ainsi que le contour 12 de l'adaptateur 2 est partiellement découpé en longueur mais sur la totalité de l'épaisseur 6 de la plaque 1 par des découpes 15, ici au nombre de six. Entre ces découpes 15, qui sont typiquement réalisées au moyen d'un poinçon, persistent des épargnes de matières qui assurent le maintien de l'adaptateur 2 ensemble avec la plaque 1. La séparation de l'adaptateur 2 de la plaque 1 est réalisée par rupture de ces épargnes.

Au contraire, le contour 13 de la carte 3 est partiellement découpé en épaisseur mais sur la totalité de la longueur dudit contour 13, par un sillon 16 sur au moins une des deux faces. Dans l'exemple illustré, un sillon 16 a été réalisé sur chacune des deux faces. Ces deux sillons 16 sont avantageusement en regard l'un de l'autre. Ils laissent persister une épaisseur résiduelle qui permet de maintenir la carte ensemble avec la plaque 1 et/ou l'adaptateur 2. La séparation de la carte 3 de la plaque 1 est réalisée par rupture de cette épaisseur résiduelle dans l'alignement du/des sillons(s) 16.

Le procédé selon l'invention, tel que décrit précédemment est avantageusement appliqué à une carte (3) à microcircuit, ou carte à puce. Une telle carte (3) comprend de manière connue une plaque de contact fournissant des interfaces électriques à un microcontrôleur ou puce typiquement disposé dans l'épaisseur de la carte 3 sous ladite plaque de contact. Cette plaque de contact est ainsi disposée dans l'épaisseur de la carte 3 de manière à venir affleurer à la surface d'une des faces de la carte 3.

Afin que la plaque de contact soit aussi affleurante relativement à la surface de la face de la plaque 1, un trou 4, de préférence unique, est avantageusement réalisé tel qu'il débouche dans la face de la carte 3 opposée à la face de la plaque de contact.

Cependant un tel arrangement n'est pas obligatoire et il est possible de réaliser un trou 4 dans la même face que la face de la plaque de contact.

Si deux trous 4 sont réalisés, un premier trou est dans la même face et un deuxième trou est dans la face opposée.

L'invention concerne encore une plaque 1 ainsi réalisée, comprenant au moins une carte détachable 3.

## Revendications

1. Procédé de fabrication d'une carte (3) de petit format (8) et de petite épaisseur (5) et d' un adaptateur (2) de grand format (9), à partir d'une plaque (1) de grande épaisseur (6), la carte (3) et l'adaptateur (2) étant tous deux détachables de ladite plaque (1) comprenant les étapes suivantes :
- réalisation (31) dans la plaque (1) de grande épaisseur (6) d'au moins un trou (4) en regard, de profondeur cumulée (7) égale à la différence entre la grande épaisseur (6) et la petite épaisseur (5),
***caractérisé* en ce** ***qu**'il* comprend encore les étapes suivantes :
- prédécoupe (32) de la carte (3) de petit format (8) inscrite dans ledit au moins un trou (4), et
- prédécoupe (33) de l'adaptateur (2) de grand format (9) de sorte qu'il présente une grande épaisseur sur au moins une partie de sa surface.

2. Procédé selon la revendication 1, où l'adaptateur (2) circonscrit la carte (3).

3. Procédé selon la revendication 2, où l'adaptateur (2) circonscrit le trou (4).

4. Procédé selon l'une quelconque des revendications 1 à 3, où un adaptateur (2) est disposé à côté de la carte (3).

5. Procédé selon l'une quelconque des revendications 1 à 3, où un trou (4) est réalisé par matriçage de la plaque (1) au moyen d'un poinçon (17) complémentaire dudit trou (4).

6. Procédé selon l'une quelconque des revendications 1 à 3, où un trou (4) est réalisé par moulage de la plaque (1), au moyen d'un moule (21) comprenant une forme (22) complémentaire dudit trou (4).

7. Procédé selon l'une quelconque des revendications 1 à 3, où un trou (4) est réalisé par usinage de la plaque (1).

8. Procédé selon l'une quelconque des revendications 1 à 7, où une étape de prédécoupe (32, 33) comprend une découpe partielle en longueur et totale en épaisseur.

9. Procédé selon l'une quelconque des revendications 1 à 8, où une étape de prédécoupe (32, 33) comprend une découpe totale en longueur et partielle en épaisseur.

10. Procédé selon l'une quelconque des revendications 1 à 9, où la carte (3) est une carte à microcircuit comprenant une plaque de contact disposée sur une de ses faces, et où l'étape de réalisation (31) réalise un trou (4) sur la face opposée à la plaque de contact.

11. Procédé selon l'une quelconque des revendications 1 à 10, où la carte (3) est une carte à microcircuit comprenant une plaque de contact disposée sur une de ses faces, et où l'étape de réalisation (31) réalise un trou (4) sur la même face que la plaque de contact.

12. Produit obtenu par le procédé selon l'une quelconque des revendications précédentes.

## Patentansprüche

1. Verfahren zur Herstellung einer Karte (3) von kleinem Format (8) und geringer Dicke (5) und eines Adapters (2) von großem Format (9) aus einer Platte (1) von großer Dicke (6), wobei die Karte (3) und der Adapter (2) beide von der Platte (1) lösbar sind, umfassend die folgenden Schritte:
- in der Platte (1) von großer Dicke (6) Herstellung (31) mindestens eines gegenüberliegenden Loches (4) von kumulierter Tiefe (7) gleich der Differenz zwischen der großen Dicke (6) und der kleinen Dicke (5),
**dadurch gekennzeichnet, dass** es ferner die folgenden Schritte umfasst:
- Vorausschneiden (32) der Karte (3) von kleinem Format (8), die in dem mindestens einen Loch (4) eingeschrieben ist, und
- Vorausschneiden (33) des Adapters (2) von großem Format (9), so dass er eine große Dicke auf mindestens einem Teil seiner Fläche aufweist.

2. Verfahren nach Anspruch 1, bei dem der Adapter (2) die Karte (3) umschreibt.

3. Verfahren nach Anspruch 2, bei dem der Adapter (2) das Loch (4) umschreibt.

4. Verfahren nach einem der Ansprüche 1 bis 3, bei dem ein Adapter (2) neben der Karte (3) angeordnet ist.

5. Verfahren nach einem der Ansprüche 1 bis 3, bei dem ein Loch (4) durch Stanzen der Platte (1) mit Hilfe eines zum Loch (4) komplementären Stempels (17) hergestellt wird.

6. Verfahren nach einem der Ansprüche 1 bis 3, bei dem ein Loch (4) durch Formen der Platte (1) mit Hilfe einer Gussform (21), umfassend eine zum Loch (4) komplementäre Form (22), hergestellt wird.

7. Verfahren nach einem der Ansprüche 1 bis 3, bei dem ein Loch (4) durch Bearbeiten der Platte (1) hergestellt wird.

8. Verfahren nach einem der Ansprüche 1 bis 7, bei dem ein Schritt des Vorausschneidens (32, 33) ein teilweises Ausschneiden in der Länge und ein vollständiges Ausschneiden in der Dicke umfasst.

9. Verfahren nach einem der Ansprüche 1 bis 8, bei dem ein Schritt des Vorausschneidens (32, 33) ein vollständiges Ausschneiden in der Länge und ein teilweises Ausschneiden in der Dicke umfasst.

10. Verfahren nach einem der Ansprüche 1 bis 9, bei dem die Karte (3) eine Mikrochipkarte ist, umfassend eine Kontaktplatte, die auf einer ihrer Seiten angeordnet ist, und bei dem der Herstellungsschritt (31) ein Loch (4) auf der der Kontaktplatte gegenüberliegenden Seite herstellt.

11. Verfahren nach einem der Ansprüche 1 bis 10, bei dem die Karte (3) eine Mikrochipkarte ist, umfassend eine Kontaktplatte, die auf einer ihrer Seiten angeordnet ist, und bei dem der Herstellungsschritt (31) ein Loch (4) auf derselben Seite wie die Kontaktplatte herstellt.

12. Produkt, das durch das Verfahren nach einem der vorhergehenden Ansprüche erhalten wird.

## Claims

1. Process for manufacturing a card (3) of small format (8) and of small thickness (5) and an adapter (2) of large format (9) from a carrier (1) of large thickness (6), the card (3) and the adapter (2) both being detachable from said carrier (1), comprising the following steps:
- producing (31), facing, in the carrier (1) of large thickness (6), at least one hole (4) of cumulative depth (7) equal to the difference between the large thickness (6) and the small thickness (5),
**characterized in that it** also comprises the following steps:
- precutting (32) the card (3) of small format (8), the card (3) being inscribed in said at least one hole (4), and
- precutting (33) the adapter (2) of large format (9) so that it has a large thickness over at least some of its area.

2. Process according to claim 1, wherein the adapter (2) circumscribes the card (3).

3. Process according to claim 2, wherein the adapter (2) circumscribes the hole (4).

4. Process according to any one of claims 1 to 3, wherein an adapter (2) is arranged beside the card (3).

5. Process according to any one of claims 1 to 3, wherein a hole (4) is produced by stamping the carrier (1) by means of a punch (17) that is complementary to said hole (4).

6. Process according to any one of claims 1 to 3, wherein a hole (4) is produced by molding the carrier (1), by means of a mold (21) comprising a shape (22) that is complementary to said hole (4).

7. Process according to any one of claims 1 to 3, wherein a hole (4) is produced by machining the carrier (1).

8. Process according to any one of claims 1 to 7, wherein a precutting step (32, 33) comprises cutting partially lengthwise and completely thicknesswise.

9. Process according to any one of claims 1 to 8, wherein a precutting step (32, 33) comprises cutting completely lengthwise and partially thicknesswise.

10. Process according to any one of claims 1 to 9, wherein the card (3) is a microcircuit card comprising a contact plate arranged on one of its faces, and wherein the producing step (31) produces a hole (4) on the face opposite the contact plate.

11. Process according to any one of claims 1 to 10, wherein the card (3) is a microcircuit card comprising a contact plate arranged on one of its faces, and wherein the producing step (31) produces a hole (4) on the same face as the contact plate.

12. Product obtained by the process according to any one of the preceding claims.
